# EUROPÄISCHE PATENTSCHRIFT

(11) **EP 3 756 800 B1**
(45) Veröffentlichungstag und Bekanntmachung des Hinweises auf die Patenterteilung: **03.08.2022**
(21) Anmeldenummer: 20174340.8
(22) Anmeldetag: 13.05.2020
(51) Int. Cl.: B23B 27/04, B23B 27/08, B23B 29/04

(54) **KLEMMHALTER**
TOOL HOLDER WITH ELASTIC CLAMPING
SUPPORT DE PINCE

(30) Priorität: 28.06.2019 DE 202019103574 U
(43) Veröffentlichungstag der Anmeldung: 30.12.2020
(73) Patentinhaber: ZCC Cutting Tools Europe GmbH, 40472 Düsseldorf (DE)
(72) Erfinder: Agustin-Paya, José, 45478 Mülheim an der Ruhr (DE); Weißschnur, Jan, 40221 Düsseldorf (DE)
(74) Vertreter: Patentanwälte Vomberg & Schart

(56) Entgegenhaltungen:
- DE-C3- 3 906 822
- DE-C3- 3 906 822
- US-B1- 6 244 790
- US-B2- 6 702 528

## Beschreibung

Die Erfindung betrifft einen Klemmhalter mit einer Aufnahmeöffnung zur lösbaren Einspannung eines Schneideinsatzes, die durch eine untere Klemmbacke, eine dieser gegenüberliegenden oberen Klemmbacke sowie eine hintere Anschlagfläche definiert ist, wobei sich im rückwärtigen Bereich der Aufnahmeöffnung neben der hinteren Anschlagfläche ein Schlitz anschließt, so dass die obere Klemmbacke gegenüber der unteren Klemmbacke abspreizbar ist.

Ein solcher Klemmhalter wird in der US 6,244,790 B1 beschrieben.

Aus der US 6,702,528 B2 ist ein Stechwerkzeug mit einer Aufnahmetasche bekannt, die eine profilierte Bodenfläche sowie eine hierzu beabstandete obere Klemmbacke und eine hintere schrägverlaufende Seitenfläche mit einer querliegenden Bohrung aufweist, in der ein zylindrischer Stift aus einem gehärteten Stahl oder einem Hartmetall eingeschoben ist, dessen Zylindermantelfläche teilweise aus der Seitenfläche hervorragt und als Anschlag für einen Schneideinsatz dient.

Solche Klemmhalter werden insbesondere für Schneideinsätze benötigt, die zum Stech- und Längsdrehen sowie für Abstech- und Abtrennvorgänge an einem rotierenden Werkstück eingesetzt werden. Die Schneideinsätze, die bei der Zerspanung einen Verschleiß unterliegen, müssen spätestens dann ausgewechselt werden, wenn aufgrund des Verschleißes die nötige Fertigungsgenauigkeit beim Zerspanen nicht mehr gewährleistet ist. Kommt es aufgrund eines erhöhten Verschleißes zu einem Schneidkantenbruch, kann dies beim fortgesetzten Zerspanen dazu führen, dass das Werkstück unbrauchbar wird. Um eine selbsttätige Klemmspannung, ein einfaches Auswechseln und Einsetzen der Schneideinsätze zu ermöglichen und andererseits eine optimale Halterung zu gewährleisten, wird daher in der DE 32 19 150 C3 ein Stechwerkzeug mit einer Aufnahmeöffnung vorgeschlagen, bei der eine rückwärtige erweiterte Ausnehmung vorgesehen ist, die eine schmale Brücke zur oberen Kante der oberen Klemmbacke bildet, so dass der Schnittdruck durch hebelartiges Verschwenken der oberen Klemmbacke zu einer proportionalen Erhöhung der Klemmspannung führt. Die Klemmfläche der oberen Klemmbacke soll gegenüber der Klemmfläche des Schneideinsatzes leicht nach innen ansteigen. Zum Entnehmen des Schneideinsatzes durch Aufspreizen der Klemmschenkel wird ein elliptischer Schlüssel in die rückwärtige erweiterte Ausnehmung gesteckt und durch entsprechendes Verdrehen die obere Klemmbacke abgespreizt.

Einen Halter mit einer durch eine untere und eine obere Klemmbacke sowie einen hinteren Anschlag definierten Aufnahmeöffnung, der sich ein L-förmiger Schlitz anschließt, wird auch in der DE 39 06 822 C3 beschrieben. Im Knickbereich des L-förmigen Schlitzes ist eine ovale Form gewählt, welche als Führung für den Aufspreizschlüssel mit elliptischen Querschnittsprofilen beim Aufspreizen der Klemmbacken dient.

In der DE 199 55 581 B4 wird ein Schneideinsatz-Klemmhalter beschrieben, der eine untere Basisbacke sowie eine elastisch abspreizbare obere Klemmbacke aufweist, die zusammen mit einem hinteren Anschlag eine Aufnahmeöffnung für einen Schneideinsatz bilden. Der obere Klemmarm besitzt zwei durch eine Aussparung unterbrochene Einspannflächen. Oberhalb des hinteren Anschlags erstreckt sich eine L-förmig ausgebildete breite Öffnung; eine weitere Öffnung soll sich unterhalb des hinteren Anschlags befinden. Die obere L-förmige Öffnung ist derart gestaltet, dass sie sich in einer Richtung nach oben und vorne erstreckt, wodurch zum einen ein schmaler Überbrückungsabschnitt zur oberen Kante des oberen Klemmarms und ein zweiter schmaler Überbrückungsabschnitt zwischen dem sich nach vorne erstreckenden Teil und der hinteren Einspannfläche ergibt. Eine solche Konstruktion hat aufgrund der filigranen Ausbildung der Überbrückungsabschnitte den Nachteil, dass der Schneideinsatz nicht sicher gehalten werden kann.

Bei Klemmhaltern der beschrieben Art wird die hintere Anschlagfläche beim Stechvorgang stark belastet, was in Folge entstehender Wärme und der mechanischen Einwirkung zu einer Verformung und demzufolge zu einem Werkzeugausfall führen kann.

Es ist daher Aufgabe der vorliegenden Erfindung, einen Klemmhalter zu schaffen, bei dem diese Nachteile vermieden werden.

Diese Aufgabe wird durch einen Klemmhalter mit den Merkmalen des unabhängigen Anspruchs 1 gelöst. Bei einem solchen Klemmhalter weist die hintere Anschlagfläche mindestens ein Verstärkungselement auf, das aus einem Bolzen besteht, der in einer die hintere Anschlagfläche mündende Bohrung fixiert ist. Der Bolzen kann in der Bohrung eingeschraubt oder eingesteckt sein. Die Bohrung hat eine Tiefe, die der Bolzenlänge entspricht, so dass der Bolzen bündig mit der Anschlagfläche abschließt.

Der Bolzen kann zylindrisch sein oder auch unrunde Querschnittsformen aufweisen. Vorzugsweise ist der Bolzen 0,8 mm bis 15 mm lang und/oder besitzt einen Durchmesser zwischen 0,3 mm und 5 mm, vorzugsweise zwischen 0,5 mm und 2 mm. Der Klemmhalter, der aus Stahl besteht, wird nach einer Weiterentwicklung der Erfindung mit mindestens einem Verstärkungselement aus Hartmetall, Keramik, einem Cermet oder einem CBN bestückt. Solche Verstärkungselemente, insbesondere Bolzen stabilisieren den Bereich des Klemmhalters an und hinter der Anschlagfläche, so dass den in Folge einer Wärme- und Krafteinwirkung drohenden Verformungen wirksam entgegengewirkt wird.

Ein Ausführungsbeispiel des Klemmhalters ist in den Zeichnungen dargestellt. Es zeigen:
Fig. 1 einen Klemmhalter mit einem Bolzen in einer Explosionsansicht und
Fig. 2 eine Detailansicht der Anschlagfläche mit dem Bolzen.

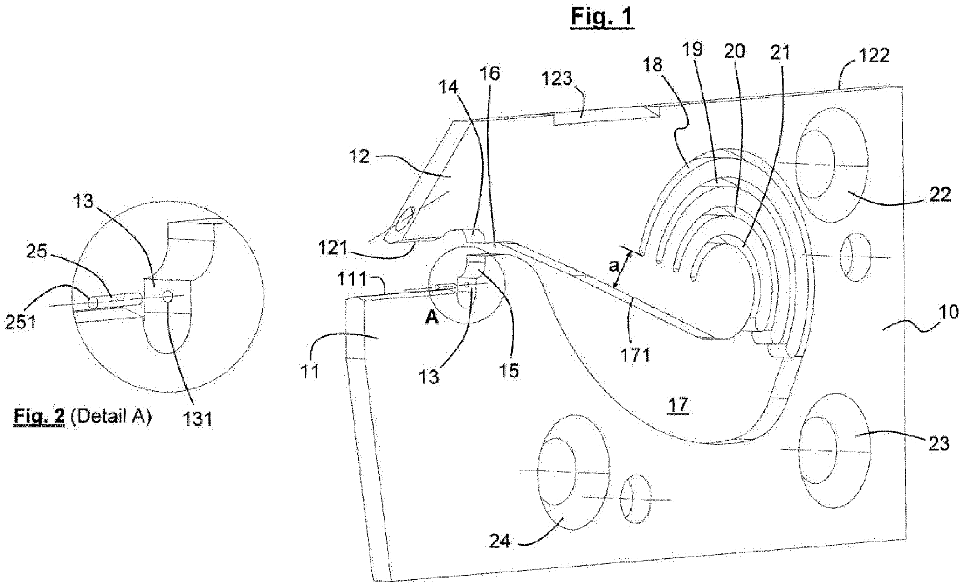

Werkzeuggrundhalter mit einem Anschluss an eine Werkzeugmaschine, z.B. eines HSK-Hohlschaftkegel sowie einer entsprechend Kühlmittelzufuhr sind im Prinzip nach dem Stand der Technik bekannt. Das komplette Werkzeug setzt sich beispielsweise aus einem Werkzeuggrundkörper, einer Trägerkassette, an der eine Spannpratze befestigt wird und einem Klemmhalter, der in Fig. 1 dargestellten Art zusammen, in dem ein Schneideinsatz eingespannt wird. Der in Fig. 1 dargestellte Klemmhalter 10 besitzt eine untere Klemmbacke 11 sowie eine obere Klemmbacke 12, die mit einem hinteren Anschlag 13 eine Aufnahmeöffnung für einen Schneideinsatz bilden. Die Klemmflächen 111 und 121 sind gewölbt oder prismatisch ausgebildet und greifen in entsprechende Ausnehmungen eines nicht dargestellten Schneideinsatzes ein. Neben dem Anschlag bzw. zwischen gewölbten Flächen 14, 15 befindet sich ein Schlitz 16, der in eine bauchförmig gestaltete Ausnehmung 17 mündet. Der Schlitz 16 hat vorzugsweise eine Länge von 2 mm bis 15 mm. Die Erweiterung 17 erstreckt sich in einen Bereich, der sich unterhalb der durch die Klemmflächen 121 und 111 gebildeten Ebenen erstreckt. Dieser Bereich gewährleistet bei gleichzeitiger kurzer Ausbildung des Schlitzes 16 eine leichte Abführung abgespülter Späne. Die Länge der Erweiterung 17 liegt zwischen 40 mm und 80 mm und deren Höhe zwischen 10 mm bis 25 mm, vorzugsweise zwischen 10 mm und 20 mm. An dem oberen Bereich der Erweiterung 17 schließen sich am hinteren Ende jeweils im gleichen Abstand Schlitze an, welche eine geringe Breite von 0,1 mm bis 3 mm besitzen und einen Winkelbereich von 180° beschreiben.

Diese halbkreisförmig ausgebildeten Schlitze 18 bis 21 enden in einem Abstand a von der Oberkante 171 der Erweiterung 17. Die Schlitze 18 bis 21 gewährleisten die Elastizität des oberen Klemmarms 12 ohne Stabilitätseinbußen des Klemmhalters. Statt der halbkreisförmigen Schlitze können noch offene Polygonzüge verwendet werden, die zumindest über ein Winkelmaß von 120° oder mehr verlaufen. Alternativ lässt sich die vorliegende Erfindung auch bei andersartigen Klemmhaltern verwirklichen, bei denen der Schlitz 16 bzw. die Erweiterung 17 linear oder nicht linear in Richtung der oberen Fläche 122, d.h. der Verlängerung des Klemmarms 12, aber vor dieser Verlängerung endend ausgebildet sind. Wesentlich für die Klemmelemente ist jeweils, dass der obere Klemmarm elastisch ist. Zur Fixierung des Schneideinsatzes greift eine (nicht dargestellte) Spannpratze auf die Spannfläche 123 ein. Die zudem dargestellten Bohrungen 22 bis 24 mit entsprechenden Ansenkungen dienen zur Durchführung und Fixierung des Klemmhalters an einem Träger oder einem Werkzeuggrundhalter. Wie insbesondere aus Fig. 2 ersichtlich, weißt die Anschlagfläche 13 eine Bohrung 131 auf, die vorzugsweise 0,5 mm bis 2 mm tief ist. Diese Sacklochbohrung dient zur Aufnahme eines zylinderförmigen Bolzens 25, der einen etwa gleichgroßen Außendurchmesser hat, so dass der Bolzen als Verstärkungselement in die Bohrung geschoben oder getrieben werden kann, wo er reibschlüssig fixiert ist. Die Bolzenlänge ist gleichgroß der Tiefe der Sacklochbohrung 131, so dass die Bolzenvorderfläche 251 bündig mit der Anlagefläche 13 abschließt. Der Bolzen besteht aus einem Hartmetall, einem Cermet, CBN oder ähnlichen Materialien, die eine größere Biegesteifigkeit als das Material haben, aus dem der Klemmhalter 10 gefertigt ist.

Die vorliegende Erfindung ist jedoch nicht auf die in Fig. 1 und 2 dargestellte Ausführungsform beschränkt. Alternativ und je nach Breite des Klemmhalters können auch mehrere Bolzen nebeneinander in entsprechende Bohrungen eingelassen werden.

## Patentansprüche

1. Klemmhalter mit einer Aufnahmeöffnung zur lösbaren Einspannung eines Schneideinsatzes, die durch eine untere Klemmbacke (11), eine dieser gegenüberliegenden oberen Klemmbacke (12) sowie eine hintere Anschlagfläche (13) definiert ist, wobei sich im rückwärtigen Bereich der Aufnahmeöffnung neben der hinteren Anschlagfläche (13) ein Schlitz (16) anschließt, so dass die obere Klemmbacke (12) gegenüber der unteren Klemmbacke (11) abspreizbar ist,
**dadurch gekennzeichnet, dass**
die hintere Anschlagfläche (13) mindestens ein aus einem Bolzen (25) bestehendes Verstärkungselement aufweist, wobei der Bolzen (25) in einer in die hintere Anschlagfläche (13) mündende Bohrung (131) fixiert ist und bündig mit der Anschlagfläche (13) abschließt.

2. Klemmhalter nach Anspruch 1, **dadurch gekennzeichnet, dass** der Bolzen (25) in der Bohrung eingeschraubt oder reibschlüssig befestigt ist.

3. Klemmhalter nach einem der Ansprüche 1 oder 2, **dadurch gekennzeichnet, dass** der Bolzen (25) zylindrisch ist.

4. Klemmhalter nach einem der Ansprüche 1 bis 3, **dadurch gekennzeichnet, dass** der Bolzen (25) 0,8 mm bis 15 mm lang ist und/oder einen Durchmesser zwischen 0,3 mm und 5 mm, vorzugsweise zwischen 0,5 mm und 2 mm besitzt.

## Claims

1. Tool holder with a receiving opening for the releasable clamping a cutting insert, which is defined by a lower clamping jaw (11), an opposite upper clamping jaw (12) and a rear stop surface (13), wherein in the rear area of the receiving opening next to the rear stop surface (13) a slot (16) connects, so that the upper clamping jaw (12) can be spread apart relative to the lower clamping jaw (11),
**characterized in that**
the rear stop surface (13) has at least one reinforcement element, consisting of a bolt (25) which is fixed in a bore (131) opening in the rear stop surface (13) and terminating flush with the stop surface (13).

2. Tool holder according to claim 1, **characterized in that** the bolt (25) is screwed into the bore or fastened with a friction fit.

3. Tool holder according to one of claim 1 or 2, **characterized in that** bolt (25) is cylindrical.

4. Tool holder according to one of claims 1 to 3, **characterized in that** the bolt (25) is 0,8 mm to 15 mm long and/or has a diameter of between 0,3 mm and 5 mm, preferably between 0,5 mm and 2 mm owns.

## Revendications

1. Support de serrage ayant une ouverture de réception destinée à serrer de manière amovible un insert de coupe et qui est définie par une mâchoire inférieure de serrage (11), une mâchoire supérieure de serrage (12) située en regard de celle-ci ainsi que par une surface de butée arrière (13), dans lequel la zone arrière de l'ouverture de réception, à côté de la surface de butée arrière (13), est suivie d'une fente (16) de sorte que la mâchoire supérieure de serrage (12) peut être écartée par rapport à la mâchoire inférieure de serrage (11), **caractérisé par le fait que** la surface de butée arrière (13) présente au moins un élément de renfort constitué par un boulon (25), dans lequel le boulon est fixé dans un alésage (131) débouchant dans la surface de butée arrière (13) et se termine à fleur de la surface de butée (13).

2. Support de serrage selon la revendication 1, **caractérisé par le fait que** le boulon (25) est vissé ou fixé par friction dans l'alésage.

3. Support de serrage selon l'une quelconque des revendications 1 ou 2, **caractérisé par le fait que** le boulon (25) est cylindrique.

4. Support de serrage selon l'une quelconque des revendications 1 à 3, **caractérisé par le fait que** le boulon (25) présente une longueur comprise entre 0,8 mm et 15 mm et/ou présente un diamètre compris entre 0,3 mm et 5 mm, de préférence entre 0,5 mm et 2 mm.
